Europäisches Patentamt

European Patent Office

Office européen des brevets

(11) Veröffentlichungsnummer: **0 502 324 A1**

## (12) EUROPÄISCHE PATENTANMELDUNG

(21) Anmeldenummer: **92101686.1**

(22) Anmeldetag: **01.02.92**

(51) Int. Cl.⁵: **C09J 4/00**

(30) Priorität: **04.03.91 DE 4106766**

(43) Veröffentlichungstag der Anmeldung:
**09.09.92 Patentblatt 92/37**

(84) Benannte Vertragsstaaten:
**DE ES FR GB IT SE**

(71) Anmelder: **Nokia (Deutschland) GmbH**
**Östliche Karl-Friedrich-Strasse 132**
**W-7530 Pforzheim(DE)**

(72) Erfinder: **Lang, Johann, Dipl.-Ing.**
**Laaberstrasse 2**
**W-8441 Obermotzing(DE)**

(54) **Klebstoff auf Acrylatbasis.**

㊗ Erfindungsgemäß wird ein Klebstoff (24) auf Acrylatbasis angegeben, dessen Ausdehnung bei 120°C unter 0,1% liegt. Hierzu ist dem Basisstoff - einem Metylmethacrylat - ein Vernetzungsmittel, insbesondere ein tri-funktionelles Acrylat zugesetzt. Der Anteil des Vernetzungsmittels im Basisstoff kann dabei im Bereich zwischen 2 bis 13 Gewichts-% gewählt werden, wobei ein Eigenschaftsoptimum im Bereich zwischen 6 und 10 Gewichts-% liegt. Mittels des erfindungsgemäßen Klebstoffes lassen sich Ferritkernhälften (20.1, 20.2) unabhängig von ihrem gewünschten Abstand zueinander gleichermaßen gut verkleben.

FIG

Die Erfindung bezieht sich auf einen Klebstoff, dessen Basisstoff ein bi-funktionelles Acrylat ist.

Derartige Klebstoffe, deren Basisstoff beispielsweise Metylmethacrylat ist, sind im Stand der Technik weit verbreitet und bedürfen daher keiner weiteren Erörterung.

Ein Anwendungsgebiet für Klebstoffe, deren Basisstoff ein bi-funktionelles Acrylat ist, ist die Transformatortechnik. Dort werden mittels des vorbeschriebenen Klebstoffs die das Joch des Transformators bildenden Ferritkernhälften miteinander verklebt. Zum Erhalt einer vorgegebenen Induktivität des Transformators ist es aber notwendig darauf zu achten, daß der die Induktion entscheidend prägende Abstand zwischen den Kernhäften (auch Luftspalt genannt) in jedem Betriebszustand des Transformators konstant bleibt. Der für die Verklebung der Kernhäften sorgende und der die Luftspalte zwischen den Kernhälften ausfüllende bekannte Acrylat-Klebstoff kann diese Forderung nur bedingt erfüllen. Dies ist auf zwei Gründe zurückzuführen. Einmal haben Bi-funktionelle Acrylate als sogenannte Thermoplaste die Eigenschaft sich unter Wärmeeinwirkung auszudehnen. Daüber hinaus haben Transformatoren die Neigung während ihres Betriebes Wärme freisetzen. Dies hat zur Folge, daß sich im Betrieb des Transformators der Abstand zwischen den beiden Kernhälften ständig vergrößert. Mit der Abstandsänderung ist eine Induktivitätsänderung verbunden. Diese Induktionsänderung vergrößert die Wärmefreisetzung des Transformators, so daß sich der Abstand der Kernhälften zueinander weiter vergrößert. Dieser sehr nachteilige Effekt hatte zur Folge, daß in vielen Anwendungsfällen Transformatoren, deren Kernhälften mittels Metylmethacrylat verbunden waren, nicht eingesetzt werden konnten.

Zur Behebung dieser Nachteile derartiger Klebeverbindungen sind im Stand der Technik zwei Maßnahmen bekannt. Zum einen wird angegeben das bi-funktionelle Acrylat mit einem anorganischen Füllstoff -beispielsweise Quarzmehl- zu dotieren. Diese Beigabe von Füllstoff bewirkt, daß der Wärmeausdehnungskoeffizient des mit Füllstoff versetzten Acrylats gegenüber füllstofffreiem Acrylat abgesenkt wird. Da diese Maßnahme den Wärmeausdehnungskoeffizienten des Acrylatklebstoffs aber nur in geringem Maße absenkt, lassen sich mittels des gefüllten Acrylatklebstoffes nur Transformatoren ausbilden, deren Abstand zwischen den Kernhälften ≤ 0,6 mm liegt. Dies deshalb, weil nur bei den geringen Abständen zwischen den Kernhälften die absolute, und durch die verbleibende Wärmeausdehnung der gefüllten Klebstoffe hervorgerufene Abstandsänderung zwischen den beiden Kernhälften vernachlässigt werden kann.

Abstände von ≥ 0,6 mm zwischen den Kernhälften an ihren Verbindungsstellen lassen sich nur dadurch ausbilden, daß im Spalt zwischen den Kernhälften der Dicke des Spalts entsprechende Distanzblättchen angeordnet sind, diese Distanzblättchen von einem bi-funktionellen, ungefüllten Acrylatkleber zur Verklebung der Kernhälften umspült sind und eine oder mehrere Klammern die Kernhälften gegen die Distanzblättchen pressen. Dadurch, daß mindestens eine Klammer die Kernhälften ständig gegen die Distanzblättchen drückt, wird ausgeschlossen, daß sich unter Wärmeeinwirkung der Abstand zwischen den Kernhälften verändert.

Daher liegt der Erfindung die Aufgabe zugrunde, einen Acrylatklebstoff anzugeben, dessen Wärmeausdehnung bei 120°C kleiner 0,2% liegt.

Darstellung der Erfindung

Diese Aufgabe wird dadurch gelöst, daß das bi-funktionelle Acrylat mit einem Vernetzungsmittel auf Acrylatbasis dotiert ist. Vorteilhafte Ausbildungen der Erfindung sind den Ansprüchen 2 bis 4 zu entnehmen. Beträgt gemäß Anspruch 3 der Gewichtsanteil des tri-funktionellen Acrylats im bi-funktionellen Acrylat etwa 7%, werden die geringsten Wärmeausdehnungswerte erreicht. Versprödungen des Klebstoffs sind in diesem Bereich nicht zu verzeichnen.

Wird nach Anspruch 4 der erfindungsgemäße Klebstoff zum Verbinden von Ferritkernhälften eingesetzt, lassen sich Ferritkernhälften unabhängig von ihrem Abstand zueinander gleichermaßen gut miteinander verkleben. Zusätzliche Maßnahmen, wie etwa der Zusatz von Füllstoffen sowie das Verklammern der Kernhälften miteinander sind nicht mehr erforderlich.

Wege zum Ausführen der Erfindung

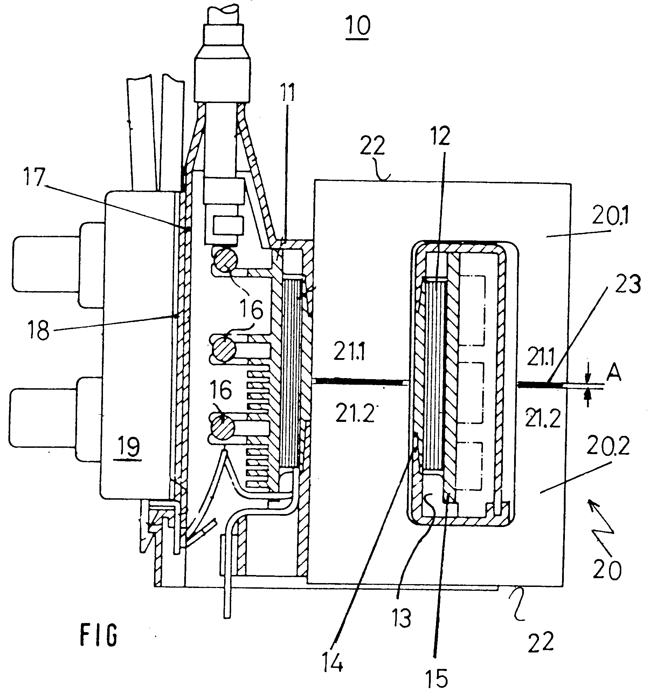

Die Erfindung soll nun anhand einer einzigen Figur näher erläutert werden. Diese Figur zeigt einen Schnitt durch einen Hochspannungstransformator 10, wie er in Fernsehgeräten Verwendung findet. Dieser Hochspannungstransformator 10 weist ein Isolierstoffgehäuse 11 auf, in dem eine Wicklung 12 dargestellt ist. Diese Wicklung 12, welche auch als Primärwicklung bezeichnet wird, ist dabei auf dem Außenmantel 13 eines rohrförmigen, im Inneren des Isolierstoffgehäuses 11 gelegenen und von dem Isolierstoffgehäuse 11 gleichzeitig gebildeten Teilstück 14 ausgebildet. Auf dem Spulenkörper 15, der die Wicklung 12 ummantelt, sind eine Anzahl von Wickelkammern ausgebildet, in die die Wicklungen der Hochspannungs-Sekundärwicklung gewickelt sind (nicht dargestellt). Am Umfang des Spulenkörpers 15 sind die zwischen die Teilwicklungen der Hochspannungs-Sekundärwicklung geschalteten Dioden 16 angeordnet. Das Isolierstoffgehäuse 11 besitzt eine Trennwand 17, an deren Seiten Schiebesitzführungen 18 angeordnet sind. Die Einstelleranordnung 19 ist in die Schiebesitzführungen 18 eingeführt.

Der das Joch des Transformators 10 bildende Ferritkern 20 wird, wie die Figur deutlich hervorhebt, von zwei U-förmig ausgebildeten Kernhälften 20.1, 20.2 gebildet, in dem die Schenkel 21.1 der einen Kernhälfte 20.1 mit den Schenkeln 21.2 der anderen Kernhälfte 20.2 verklebt sind. Wie in der Figur dargestellt, durchzieht eines der beiden miteinander verklebten Schenkelpaare den Innenraum des rohrförmig ausgebildeten Teilstücks 14, während die Bodenstücke 22 der beiden Kernhälften 20.1, 20.2 auf der Außenkontur des Isolierstoffgehäuses 11 aufliegen beziehungsweise das andere miteinander verklebte Schenkelpaar das Isolierstoffgehäuse 11 mit Abstand umrandet. Zwischen den miteinander verklebten Schenkeln 21.1, 21.2 der beiden Kernhälften 20.1 und 20.2 ist ein Abstand A eingehalten. Dieser Abstand A wird von einem Klebstoff 23 ausgefüllt. Damit während des Betriebs des Transformators und der damit einhergehenden Erwärmung der Kernhälften 20.1, 20.2 der vorbestimmte Abstand A erhalten bleibt, wird ein Klebstoff auf Acrylatbasis verwendet. Basisstoff ist ein bi-funktionelles Acrylat, wie es beispielsweise von der Firma Degussa unter der Bezeichnung F307 bezogen werden kann. Diesem Basisstoff ist ein Vernetzungsmittel auf Acrylatbasis zugesetzt. In dem hier beschriebenen Ausführungsbeispiel wurde als Vernetzungsmittel ein tri-funktionelles Acrylat des Herstellers Degussa verwendet. Der Anteil des Vernetzungsmittels im Basisstoff beträgt 6 Gewichts%. Bei dieser Klebstoffzusammensetzung liegt ein Eigenschaftsoptimum. In diesem Zusammenhang sei darauf hingewiesen, daß bei Verbindung der zuvor beschriebenen Klebstoffmischung eine Veränderung des Abstands A bei einer Temperaturbeaufschlagung des Transformators von 120°C ≦ 0,1% beträgt.

Abschließend sei darauf hingewiesen, daß der erfindungsgemäß angegebene Klebstoff nicht auf die in diesem Ausführungsbeispiel angegebene Anwendung beschränkt ist. So kann das mit tri-funktionellem Acrylat dotierte Metylmethacrylat in all den Anwendungsfällen eingesetzt werden, wo aus Gründen der Maßhaltigkeit eine temperaturbedingte Ausdehung des Klebstoffs auf metylmethacrylat Basis unerwünscht ist.

**Patentansprüche**

1. Klebstoff auf Acrylatbasis, wobei der Basisstoff ein bi-funktionelles Acrylat, insbesondere Metylmethacrylat ist,
   **dadurch gekennzeichnet,**
   daß das bi-funktionelle Acrylat mit einem acrylatischen Vernetzungsmittel dotiert ist.

2. Klebstoff nach Anspruch 1,
   **dadurch gekennzeichnet,**
   daß das Vernetzungsmittel ein tri-funktionelles Acrylat ist.

3. Klebstoff nach Anspruch 2,
   **dadurch gekennzeichnet,**
   daß der Gewichtsanteil des tri-funktionellen Acrylats im bi-funktionellen Acrylat 2 bis 13%, vorzugsweise 7% beträgt.

4. Klebstoff nach einem der Ansprüche 1 bis 3,
   **dadurch gekennzeichnet,**
   daß der Klebstoff Ferritkernhälften (20.1, 20.2) eines Transformators (10) miteinander verklebt.

FIG

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 138 326 (RAYCHEM CORPORATION) <br> * das ganze Dokument * <br> --- | 1-3 | C09J4/00 |
| A | EP-A-0 033 699 (LEGRAND) <br> --- | 1-4 | |
| A | GB-A-1 195 835 (ROTUNDA LIMITED) <br> ----- | 1-4 | |

|  |  |
|---|
| **RECHERCHIERTE SACHGEBIETE (Int. Cl.5)** |
| C09J <br> H04N <br> H01F |

Der vorliegende Recherchenbericht wurde für alle Patentansprüche erstellt

| Recherchenort | Abschlußdatum der Recherche | Prüfer |
|---|---|---|
| DEN HAAG | 11 JUNI 1992 | ANDRIOLLO G.R. |

EPO FORM 1503 03.82 (P0403)